# EUROPÄISCHE PATENTSCHRIFT

(11) **EP 2 782 313 B1**
(45) Veröffentlichungstag und Bekanntmachung des Hinweises auf die Patenterteilung: **14.10.2020**
(21) Anmeldenummer: 14001981.1
(22) Anmeldetag: 08.07.2011
(51) Int. Cl.: H04L 29/06, H04L 12/58, H04M 3/42, H04M 7/00, G06F 9/44

(54) **VERFAHREN ZUR AUTOMATISCHEN ÜBERTRAGUNG EINER INFORMATION ZUR INBETRIEBNAHME EINES FÜR DIE SPRACHKOMMUNIKATION EINGERICHTETEN KOMMUNIKATIONSENDGERÄTES AN EIN FÜR DIE TEXTKOMMUNIKATION EINGERICHTETES KOMMUNIKATIONSENDGERÄT**
METHOD FOR AUTOMATICALLY TRANSMITTING INFORMATION FOR THE START-UP OF A COMMUNICATION TERMINAL CONFIGURED TO PERFORM SPEECH COMMUNICATION TO A COMMUNICATION TERMINAL CONFIGURED TO PERFORM TEXT COMMUNICATION
PROCÉDÉ DE TRANSMISSION AUTOMATIQUE DE L'INFORMATION POUR LA MISE EN SERVICE D'UN TERMINAL DE COMMUNICATION ÉTABLI POUR LA COMMUNICATION ORALE À UN TERMINAL DE COMMUNICATION ÉTABLI POUR LA COMMUNICATION ÉCRITE

(30) Priorität: 23.12.2010 EP 10016050
(43) Veröffentlichungstag der Anmeldung: 24.09.2014
(62) Teilanmeldung aus: 11005594.4
(73) Patentinhaber: Unify GmbH & Co. KG, 81739 München (DE)
(72) Erfinder: Rist, Claus, 44797 Bochum (DE); Cordes, Sebastian, 59557 Lippstadt (DE); Fischer, Stephan, 42399 Wuppertal (DE)
(74) Vertreter: Fritzsche, Thomas

(56) Entgegenhaltungen:
- US-A1- 2004 086 100
- US-A1- 2007 016 640
- Siemens Enterprise Communications Gmbh & Co. Kg: "Information - OpenScape MobileConnect", , 1. Mai 2010 (2010-05-01), Seiten 1-6, XP055011050, Hofmannstr. 51, D-80200 München Gefunden im Internet: URL:http://ipbx.com.au/getmedia/a659382f-6 5bf-4012-aa60-a4465c5f8b49/OpenScape_Mobil eConnect_V3_Data_Sheet.aspx?disposition=at tachment [gefunden am 2011-11-02]

## Beschreibung

Die Erfindung betrifft ein Verfahren zur automatischen Übertragung einer Zustandsinformation oder Zustandsänderungsinformation bei einer Zustandsänderung eines ersten, für die Sprachkommunikation eingerichteten Kommunikationsendgerätes zu dessen Inbetriebnahme an ein zweites, für die Textkommunikation eingerichtetes Kommunikationsendgerät, bei dem die Sprachkommunikation zwischen Kommunikationsendgeräten über wenigstens einen Sprachkommunikationsserver und die Textkommunikation zwischen Kommunikationsendgeräten über wenigstens einen Textkommunikationsserver vermittelt wird. Die Erfindung betrifft außerdem eine Anordnung zur automatischen Übertragung einer Zustandsinformation oder Zustandsänderungsinformation bei einer Zustandsänderung eines ersten, für die Sprachkommunikation eingerichteten Kommunikationsendgerätes zu dessen Inbetriebnahme an ein zweites, für die Textkommunikation eingerichtetes Kommunikationsendgerät, mit wenigstens einem Textkommunikationsserver zur Vermittlung der Textkommunikation zwischen Kommunikationsendgeräten und wenigstens einem Sprachkommunikationsserver zur Vermittlung der Sprachkommunikation zwischen Kommunikationsendgeräten.

Die Integration von Telekommunikationsnetzen und Datennetzen gewinnt zunehmend an Bedeutung. Telekommunikationsnetze dienen hauptsächlich der Kommunikation von Telekommunikationsteilnehmern mit Hilfe von Telekommunikationsendgeräten wie beispielsweise Telefonen. Datennetze dienen hauptsächlich der Vernetzung von Computern, beispielsweise von PCs mit sogenannten Servern. Verfahren und Anordnungen, bei denen auf Computern installierte Anwendungen Kommunikationsanlagen und Kommunikationsverbindungen steuern und überwachen, sind allgemein als CTI-Lösungen (CTI = Computer Telephony Integration) bekannt. Dabei können einerseits Anschlüsse von Kommunikationsanlagen und andererseits Verbindungen zwischen den Anschlüssen gesteuert und überwacht werden. Bei den Verbindungen handelt es sich jeweils um temporäre Kommunikationskanäle zwischen zwei oder mehreren Teilnehmern einer Kommunikationsanlage oder mehrerer Kommunikationsanlagen.

Beim Betrieb einer CTI-Lösung werden jeweils Daten mit Steuer- und Zustandsinformationen zwischen einer Kommunikationsanlage und einer CTI-Anwendung (CTI-Anwendungsprogramm) übertragen. Dazu verfügen die Kommunikationsanlagen über spezielle Schnittstellen zum Austausch der Daten, die CTI-Schnittstellen. Ebenso verfügen die Anwendungen bzw. die PCs über eine entsprechende CTI-Schnittstelle für diesen Datenaustausch. Hierzu sind die CTI-Schnittstellen der Kommunikationsanlage und die der Anwendung über eine Datenleitung oder über ein Datennetz miteinander verbunden. Da die maximale Anzahl von CTI-Schnittstellen an einer Kommunikationsanlage beschränkt ist, wird zwischen der Kommunikationsanlage und den Anwendungen häufig ein Telefonie-Server geschaltet.

Die Druckschrift WO 98/51092 A1 "Computer telephony integration gateway" zeigt ein öffentliches Kommunikationsnetzwerk mit mehreren Kommunikationsanlagen und ein privates Kommunikationsnetzwerk mit mehreren Domänen, die jeweils Rechner mit Anwendungen zur Steuerung und/ oder Überwachung von Ressourcen des öffentlichen Kommunikationsnetzwerks aufweisen. Die gezeigte Anordnung weist als Umwertungseinrichtung einen "CTI-Gateway" auf, welches die zur Steuerung und/oder Überwachung der Ressourcen vom öffentlichen Kommunikationsnetzwerk zum privaten Kommunikationsnetzwerk versendeten Daten derart verändert, dass sich diese Daten als die Daten einer einzigen öffentlichen Kommunikationsanlage darstellen, und umgekehrt die Daten, die vom privaten Kommunikationsnetzwerk mit den Anwendungen zum öffentlichen Kommunikationsnetzwerk versendet werden, derart verändert, als ob sie aus einem privaten Kommunikationsnetzwerk mit nur einer Anwendung gesendet worden wären.

Die DE 101 59 636 B4 beschreibt ein Verfahren zur Steuerung und/oder Überwachung von Ressourcen und Verbindungen mittels Austausch von Daten zwischen Kommunikationsanlagen und mindestens einer Anwendung, wobei die Daten jeweils ein die Ressourcen und Verbindungen unterscheidendes Kennzeichen aufweisen, wobei die Kennzeichen der Ressourcen beim Austausch jeweils derart umgewertet werden, dass sie sich für die eine oder jede Anwendung als Kennzeichen einer einzigen Kommunikationsanlage mit Teilnehmeranschlüssen darstellen, dadurch gekennzeichnet, dass die Kennzeichen der Verbindung zwischen Ressourcen von verschiedenen Kommunikationsanlagen jeweils eine lokale Verbindungsnummer (Call-ID) der an der Verbindung beteiligten Kommunikationsanlagen und eine globale Verbindungsnummer (Call-ID) umfassen und dass durch die Umwertung die globale Verbindungsnummer (Call-ID) so zur Anwendung übertragen wird, dass diese von der Anwendung nicht von einer lokalen Verbindungsnummer (Call-ID) unterscheidbar ist.

Aus der US 2004/086100 A1 ist es bekannt, dass im Rahmen einer Nutzdatenverbindung zwischen einem Telefon eines Benutzers und einem für die Textkommunikation eingerichteten Endgerät eines anderen Benutzer zur Übermittlung einer Spracheingabe diese durch eine Übersetzungseinrichtung in Text transformiert wird. Zuvor erfolgt eine Signalisierung zwischen dem Telefon und dem anderen Endgerät.

Die Patentveröffentlichung US 2007/016640 A1 beschreibt ein Verfahren zum Aufbau einer Kommunikationsverbindung unter Einbeziehung eines Präsenzmanagementsystems, welches für einen "Instant messaging" Dienst verwendet wird.

Die Veröffentlichung "Information - OpenScape MobileConnect" (2010-05-01), Seiten 1-6, XP055011050, beschreibt die Integration von SIP PBX und Nutzerpräsenz.

Das XMPP-Protokoll ist ein wichtiger bekannter Vertreter sogenannter Instant Messaging Protokolle, die bei der Computer-Telefonie-Integration eine wichtige Rolle spielen. Bekannte auf dem XMPP-Protokoll basierende Client/Server-Architekturen werden asynchron zum Telefon betrieben. Eine automatische Verknüpfung und Inbetriebnahme ist bei bekannten Lösungen nicht vorgesehen.

Eine Aufgabe der vorliegenden Erfindung kann darin gesehen werden, Lösungen für die automatische Inbetriebnahme eines CTI-Servers, der beispielsweise in einer XMPP-Umgebung arbeitet, anzugeben. Diese Aufgabe wird durch ein Verfahren gemäß Anspruch 1 bzw. eine Anordnung gemäß Anspruch 4 gelöst. Vorteilhafte Weiterbildungen der Erfindung sind Gegenstand von Unteransprüchen.

Erfindungsgemäß ist ein Verfahren zur automatischen Übertragung einer Zustandsinformation oder Zustandsänderungsinformation bei einer Zustandsänderung eines ersten, für die Sprachkommunikation eingerichteten Kommunikationsendgerätes zu dessen Inbetriebnahme an ein zweites, für die Textkommunikation eingerichtetes Kommunikationsendgerät vorgesehen, bei dem die Sprachkommunikation zwischen Kommunikationsendgeräten über wenigstens einen Sprachkommunikationsserver und die Textkommunikation zwischen Kommunikationsendgeräten über wenigstens einen Textkommunikationsserver vermittelt wird. Der wenigstens eine Sprachkommunikationsserver und der wenigstens eine Textkommunikationsserver tauschen Nachrichten über wenigstens eine Umsetzungseinrichtung aus, und die Zustandsänderung zur Inbetriebnahme wird von dem einen ersten Kommunikationsendgerät über den wenigstens einen Sprachkommunikationsserver, die wenigstens eine Umsetzungseinrichtung und den wenigstens einen Textkommunikationsserver dem zweiten Kommunikationsendgerät signalisiert.

Dabei ist es vorgesehen, dass eine Übertragung einer Information zur Signalisierung der Inbetriebnahme zwischen dem Textkommunikationsserver und dem Sprachkommunikationsserver dann erfolgt, wenn der Sprachkommunikationsserver dem Textkommunikationsserver zuvor signalisiert hat, dass die Inbetriebnahme erfolgen soll.

Gemäß einer bevorzugten Ausführungsform der Erfindung, deren Merkmale auch mit Merkmalen anderer Ausführungsformen dieser Erfindung kombiniert werden können, ist es vorgesehen, dass die Übertragung der Information zur Signalisierung der Inbetriebnahme zwischen dem Textkommunikationsserver und dem Sprachkommunikationsserver in einem Umfang erfolgt, der durch eine vorherige Signalisierung spezifiziert worden ist.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass das Verfahren die Übertragung wenigstens einer Information zur Signalisierung der Inbetriebnahme an ein Kommunikationsendgerät umfasst.

Gemäß einem Beispiel ist es vorgesehen, dass wenigstens der Sprachkommunikationsserver Nachrichten ohne Aufforderung überträgt.

Erfindungsgemäß ist ferner eine Anordnung zur automatischen Übertragung einer Zustandsinformation oder Zustandsänderungs-information bei einer Zustandsänderung eines ersten, für die Sprachkommunikation eingerichteten Kommunikationsendgerätes zu dessen Inbetriebnahme an ein zweites, für die Textkommunikation eingerichtetes Kommunikationsendgerät vorgesehen, mit wenigstens einem Textkommunikationsserver zur Vermittlung der Textkommunikation zwischen Kommunikationsendgeräten und wenigstens einem Sprachkommunikationsserver zur Vermittlung der Sprachkommunikation zwischen Kommunikationsendgeräten. Dabei ist wenigstens eine Umsetzungseinrichtung vorgesehen, über die wenigstens der eine Sprachkommunikationsserver und der wenigstens eine Textkommunikationsserver Nachrichten austauschen. Die Information zur Zustandsänderung zur Inbetriebnahme des Gemäß einer bevorzugten Ausführungsform der Erfindung, deren Merkmale auch mit Merkmalen anderer Ausführungsformen dieser Erfindung kombiniert werden können, ist es vorgesehen, dass die Übertragung der Information zur Signalisierung der Inbetriebnahme zwischen dem Textkommunikationsserver und dem Sprachkommunikationsserver in einem Umfang erfolgt, der durch eine vorherige Signalisierung spezifiziert worden ist.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass das Verfahren die Übertragung wenigstens einer Information zur Signalisierung der Inbetriebnahme an ein Kommunikationsendgerät umfasst.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass wenigstens der Sprachkommunikationsserver Nachrichten ohne Aufforderung überträgt.

Erfindungsgemäß ist ferner eine Anordnung zur automatischen Übertragung einer Zustandsinformation oder Zustandsänderungsinformation bei einer Zustandsänderung eines ersten, für die Sprachkommunikation eingerichteten Kommunikationsendgerätes zu dessen Inbetriebnahme an ein zweites, für die Textkommunikation eingerichtetes Kommunikationsendgerät vorgesehen, mit wenigstens einem Textkommunikationsserver zur Vermittlung der Textkommunikation zwischen Kommunikationsendgeräten und wenigstens einem Sprachkommunikationsserver zur Vermittlung der Sprachkommunikation zwischen Kommunikationsendgeräten. Dabei ist wenigstens eine Umsetzungseinrichtung vorgesehen, über die wenigstens der eine Sprachkommunikationsserver und der wenigstens eine Textkommunikationsserver Nachrichten austauschen. Die Information zur Zustandsänderung zur Inbetriebnahme des ersten Kommunikationsendgerätes wird über den wenigstens einen Sprachkommunikationsserver, die wenigstens eine Umsetzungseinrichtung und den wenigstens einen Textkommunikationsserver wird an das zweite Kommunikationsendgerät übertragen.

Dabei ist es vorgesehen, dass die Anordnung derart eingerichtet ist, dass eine Übertragung einer Information zur Signalisierung der Inbetriebnahme zwischen dem Sprachkommunikationsserver und dem Textkommunikationsserver dann erfolgt, wenn der Sprachkommunikationsserver dem Textkommunikationsserver zuvor signalisiert hat, dass die Übertragung erfolgen soll.

Gemäß einer bevorzugten Ausführungsform der Erfindung, deren Merkmale auch mit Merkmalen anderer Ausführungsformen dieser Erfindung kombiniert werden können, ist es vorgesehen, dass die Übertragung einer Information zur Signalisierung der Inbetriebnahme zwischen dem Sprachkommunikationsserver und dem Textkommunikationsserver in einem Umfang erfolgt, der durch eine vorherige Signalisierung spezifiziert ist.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass wenigstens eine an ein Kommunikationsendgerät übertragene Information zur Signalisierung der Inbetriebnahme wenigstens eine Betriebsinformation beinhaltet.

Gemäß einer weiteren bevorzugten Ausführungsform der Erfindung, deren Merkmale auch mit Merkmalen anderer Ausführungsformen dieser Erfindung kombiniert werden können, ist es vorgesehen, dass wenigstens der Sprachkommunikationsserver Nachrichten ohne Aufforderung überträgt.

Je nach Ausführungsform ist es ein Vorteil der erfindungsgemäßen Lösung, dass ein Verfahren zur automatischen Übertragung einer Information zur Inbetriebnahme eines für die Sprachkommunikation eingerichteten Kommunikationsendgerätes an ein für die Textkommunikation eingerichtetes Kommunikationsendgerät sozusagen als "Machine to Machine" Kommunikation selbständig (automatisch) eine versionsabhängige CTI-Steuerung in Betrieb nehmen kann ohne dass hierzu Parameter konfiguriert werden müssen. Beide "Maschinen", d.h. der Switch (die PBX) und der XMPP Server teilen ihre CTI-Fähigkeiten mit und adaptieren sich selbständig (automatisch) auf die Möglichkeiten des jeweiligen Partners ohne Eingriff von außen (aushandeln von Fähigkeiten). Das bedeutet: ein Benutzer muss (im Allgemeinen und bei Start/Restart) keine Anmeldeprozedur (wie z.B. eine Konfiguration bei einem Setup/Installation eines Programms wie Microsoft Word) durchlaufen. Die Erfindung bietet somit die Basis einer Synchronisation zwischen (Switch/PBX = Voice Server und XMPP Server = Presence Server) und verheiratet sozusagen Voice und Presence (ähnlich der Hochzeit zwischen Motor und Karosserie).

Im Folgenden wird die Erfindung anhand bevorzugter Ausführungsbeispiele und mit Hilfe der Figuren näher beschrieben.

Dabei zeigt
Fig. 1 in schematischer Weise eine erste Anordnung von Systemkomponenten zur Durchführung eines Ausführungsbeispiels eines erfindungsgemäßen Verfahrens;
Fig. 2 in schematischer Weise eine zweite Anordnung von Systemkomponenten zur Durchführung eines Ausführungsbeispiels eines erfindungsgemäßen Verfahrens;
Fig. 3 in schematischer Weise einen Ablauf von Schritten eines Verfahrens gemäß einem ersten Ausführungsbeispiel der Erfindung;
Fig. 4 in schematischer Weise einen Ablauf von Schritten eines Verfahrens gemäß einem zweiten Ausführungsbeispiel der Erfindung;
Fig. 5 in schematischer Weise einen Ablauf von Schritten eines Verfahrens gemäß einem dritten Ausführungsbeispiel der Erfindung;
Fig. 6 in schematischer Weise eine dritte Anordnung von Systemkomponenten zur Durchführung eines Ausführungsbeispiels eines erfindungsgemäßen Verfahrens;
Fig. 7 in schematischer Weise eine vierte Anordnung von Systemkomponenten zur Durchführung eines Ausführungsbeispiels eines erfindungsgemäßen Verfahrens;
Fig. 8 in schematischer Weise eine fünfte Anordnung von Systemkomponenten zur Durchführung eines Ausführungsbeispiels eines erfindungsgemäßen Verfahrens.

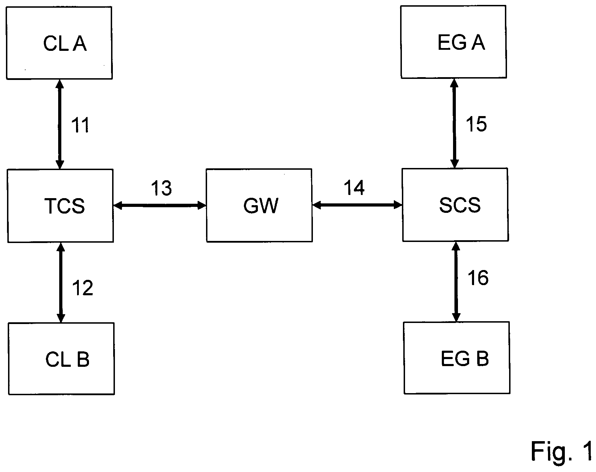

Ein bevorzugtes Ausführungsbeispiel einer erfindungsgemäßen Anordnung stellt Fig. 1 dar. Ein Sprachkommunikationsserver SCS steht in diesem Beispiel mit zwei für die Sprachkommunikation eingerichteten Endgeräten EGA und EGB in Verbindung, und tauscht mit diesen beiden Kommunikationsendgeräten Sprachnachrichten und Zustandsinformationen 15, 16 aus. Ändert sich beispielsweise der Zustand des Kommunikationsendgerätes EGA, dann überträgt dieses Kommunikationsendgerät EGA eine entsprechende Zustandsinformation an den Sprachkommunikationsserver SCS, woraufhin dieser die Zustandsinformation oder eine entsprechende Zustandsänderungsinformation 14 an die Umsetzungseinrichtung GW überträgt. Die Umsetzungseinrichtung GW überträgt daraufhin eine entsprechende Zustandsinformation oder Zustandsänderungsinformation 13 an den Textkommunikationsserver TCS, mit dem die beiden Textkommunikations-Clients CLA und CLB kommunizieren 11, 12. In diesem Beispiel wird der Textkommunikations-Client CLA von dem Kommunikationsteilnehmer genutzt, der auch das Sprachkommunikationsendgerät EGA benutzt. Entsprechend wird der Textkommunikations-Client CLB von dem Kommunikationsteilnehmer genutzt, der auch das Sprachkommunikationsendgerät EGB benutzt.

Auf diese Weise wird es möglich, dass der Kommunikationsteilnehmer, welcher den Textkommunikations-Client CLB verwendet, von einer Zustandsänderung des Sprachkommunikationsendgerätes EGA informiert wird, ohne dass der Benutzer A hierzu manuell eine Nachrichtenübertragung an den Benutzer B einleiten muss.

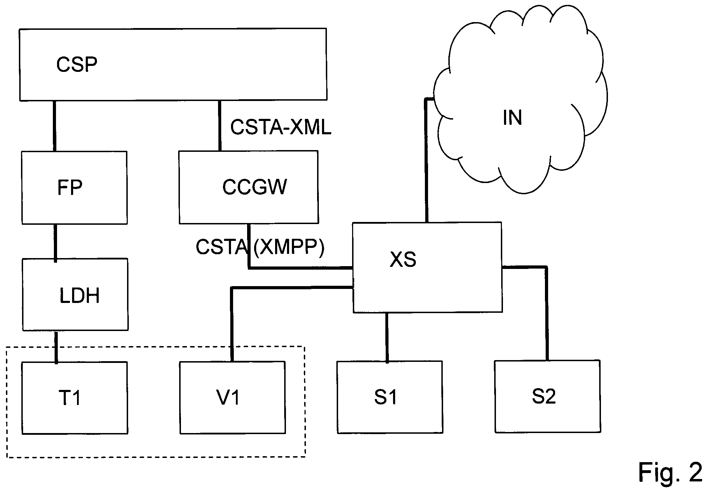

Die in Fig. 2 dargestellte Einbettung des Call Control Gateway CCGW im Gesamtsystem ausgeführt beispielhaft in Form der OpenScape Office MX ist exemplarisch und steht stellvertretend für die allgemeine erfinderische Idee, bei der das Verfahren zur automatischen Übertragung einer Information zur Inbetriebnahme wenigstens eines ersten, für die Sprachkommunikation eingerichteten Kommunikationsendgerätes (EG A, EG B) an wenigstens ein zweites, für die Textkommunikation eingerichtetes Kommunikationsendgerät (CL A, CL B), bei dem die Sprachkommunikation zwischen Kommunikationsendgeräten über wenigstens einen Sprachkommunikationsserver (SCS) und die Textkommunikation zwischen Kommunikationsendgeräten über wenigstens einen Textkommunikationsserver (TCS) vermittelt wird, wobei vorgesehen ist, dass der wenigstens eine Sprachkommunikationsserver (SCS) und der wenigstens eine Textkommunikationsserver (TCS) Nachrichten über wenigstens eine Umsetzungseinrichtung (GW) austauschen, und dass die Inbetriebnahme von wenigstens dem ersten Kommunikationsendgerät (EG A, EG B) über den wenigstens einen Sprachkommunikationsserver (SCS), die wenigstens eine Umsetzungseinrichtung (GW) und den wenigstens einen Textkommunikationsserver (TCS) dem wenigstens zweiten Kommunikationsendgerät (CL A, CL B) signalisiert wird.

In diesem Ausführungsbeispiel besteht der Sprachkommunikationsserver SCS u.a. aus einem CSTA Service Provider (CSP), einem Feature Processing (FP) und einem LAN Device Handler (LDH). Die Bezugszeichen EG A, EG B bezeichnen Endgeräte wie dargestellt, GW bezeichnet ein Call Control Gateway (CCGW), der Textkommunikationsserver (TCS) ist in diesem Beispiel ein XMPP Server - Openfire, und die Clients CL A, CL B sind beispielhaft durch XMPP Clients - Spark (S1, S2) repräsentiert. Dabei ist es möglich aber nicht erforderlich, dass die vorher beschriebenen Komponenten physikalisch voneinander getrennt sind oder sich innerhalb einer begrenzten Domain befinden.

Der Kommunikationskanal (13) zwischen dem CCGW (GW) und dem XMPP (TCS) Server kann durch eine XMPP Server/Server Verbindung realisiert werden, wobei das CCGW als eigenständiger XMPP Server agiert. Andernfalls kann er durch eine XMPP Client/Server Verbindung realisiert werden, wobei das CCGW als Client im XMPP Server (z.B. Openfire) administriert ist. Eine dritte Möglichkeit besteht darin, dass das CCGW eine Serverkomponente des XMPP Servers ist, beispielsweise gemäß XEP 0114. Der Kommunikationskanal (13) zwischen dem CCGW (GW) und dem XMPP (TCS) Server steht ebenfalls beispielhaft für die Übertragung einer Information zur Inbetriebnahme von wenigstens einem ersten Kommunikationsendgerät (CL A, CL B) über den wenigstens einen Textkommunikationsserver (TCS), die wenigstens eine Umsetzungseinrichtung (GW) und dem wenigstens einen Sprachkommunikationsserver (SCS) an das wenigstens zweite Kommunikationsendgerät (EG A, EG B).

Die PBX, ein vermittlungstechnisches System, und der Instant Messaging Server XS, beispielsweise ein XMPP Server, werden mittels eines Call Control Gateways CCGW verbunden. Das CCGW ist die Verbindung zwischen der CTI einer PBX und dem XMPP Server. Über dieses Call Control Gateway kann ein XMPP Client CTI Dienste abonnieren und zur Verfügung stellen. Hierbei handelt es sich in einer Ausführungsform der Erfindung vorzugsweise um die in ECMA-269 (Standard ECMA-269 Services for Computer Supported Telecommunications Applications (CSTA) Phase III, 8th edition (June 2009)) beschriebenen CSTA Call Control Services und Events.

Auf der einen Seite erfolgt die Anbindung an das Feature Processing via CSTA XML mittels eines sogenannten CSTA Service Providers (CSP). Auf der anderen Seite wird CSTA über XMPP an den XMPP Server (im Ausführungsbeispiel gemäß der Figur: Openfire) übertragen. Mittels des CCGW kann ein XMPP Client (im Ausführungsbeispiel gemäß der Figur: Spark) CTI Dienste abonnieren.

Um eine automatische Inbetriebnahme der CTI Funktionalität zu gewährleisten, werden vorzugsweise folgende Schritte durchlaufen:

### Schritt 1:

Bei seiner Anmeldung beim Server fragt der Client durch den Service Discovery (in einer Ausführungsform gemäß XEP-0030) die Eigenschaften des Servers ab. Die Antwort beinhaltet u.a. ein oder mehrere <feature/> Elemente. Jedes dieser Elemente umfasst ein "var" Attribut, welches den unterstützten Namespace repräsentiert. Innerhalb dieses zur Verfügung stehenden Namespace wird die mögliche CTI Funktionalität ergänzt.

Beinhaltet die Antwort innerhalb der enthaltenen <feature/>-Elemente einen Hinweis auf eine allgemeine oder versionsspezifische CTI Unterstützung, ermöglicht ein positives Prüfungsergebnis (der Client unterstützt diese CTI Version) die Anforderung von CTI Diensten beim Server mittels query-Stanza vom ermittelten Namespace, gekapselt in eine IQ-Stanza vom Typ "Get".

Sollte die Antwort des Servers mehrere CTI Versionen enthalten, die auch der Client unterstützt, so liegt es in der Implementierung des Clients die Wahl anhand einer Prioritätsliste mit priorisierten CTI Versionen bzw. Namespaces durchzuführen oder auch den in der Antwort als ersten genannten Namespace zu wählen.

Bei einer allgemeinen CTI Unterstützung des Servers erfolgt die CTI Versionsprüfung erst nach der Anforderung der CTI Funktionalität.

### Schritt 2:

Auf Service Discovery (in einer Ausführungsform gemäß XEP-0030) eines Clients meldet der Server die CTI Versionen, die er unterstützt, über den für die <feature/> Elemente festzulegenden Namespace.

Je nach Ausführungsbeispiel der Erfindung erfolgt vorzugsweise eine Unterstützung der CSTA XML Edition 3 (< feature var = "http://www.ecma-international.org/standards/ecma-323/csta/ed3" />) oder der CST XML Edition 5 (< feature var = "http://www.ecma-international.org/standards/ecma-323/csta/ed5" />).

Eine konkrete Unterstützung einer CTI Version ermöglicht es dem Server seinerseits Validitätsprüfungen auszuführen. Eine Art der Validitätsprüfung ist die positive Zuordnung des angeforderten CTI Service zur JabberID und der dem Client zugeordneten Rufnummer. Dieses ermöglicht dem Server Entscheidungen über die Qualität der CTI Verbindung (1st party oder 3rd party) zu treffen.

Bei einer Ist party CTI Verbindung darf der Client ausschließlich CTI Services für die der JabberID zugeordneten Rufnummer ausführen, andere Service Anforderungen würden abgewiesen. Bei einer 3rd party CTI Verbindung darf der Client für beliebige Rufnummern CTI Services ausführen.

Unterstützt der Server keine konkrete CTI Version kann der Server die CTI Versionsprüfung dem CCGW bzw. der nachgeschalteten CTI Instanz überlassen.

Auf die CTI Anforderung durch den Client mittels IQ gibt der Server den Status des CCGW sowie die dem Client zugeordneten Rufnummern (Devicelist) zurück.

Um Vernetzungsszenarien zu ermöglichen kann optional diese Antwort auch auf einen anderen Server verweisen, der seinerseits CTI Funktionalität unterstützt. In diesem Fall liefert die Antwort keine Devicelist und der Status des CCGW ist mit "unknown" gekennzeichnet. Das weitere Vorgehen des Clients besteht darin erneut mit Service Discovery bei dem nun bekannten Server zu beginnen.

Eine weitere Möglichkeit der Vernetzung ist die Unterstützung von mehreren CCGW durch einen einzelnen Server.

Erhält der Server vom CCGW eine Login/Logoff Meldung, sendet der Server eine Status Meldung an alle Clients, die CTI Funktionalität abonniert haben. Diese Status Meldung wird ebenfalls vom Server erzeugt, wenn die Verbindung zum CCGW abgebrochen ist.

### Schritt 3:

Mit dem Login beim Server wird die CTI Verbindung zur Verfügung gestellt. Das CCGW prüft die CTI Version und bricht die Verbindung ab, wenn das CCGW diese CTI Version nicht unterstützt. Gegebenfalls überlässt das CCGW die CTI Versionsprüfung der nachgeschalteten CTI Instanz.

Optional kann der direkte Präsenz-Status zur Unterstützung der automatischen Inbetriebnahme verwendet werden.

### a) Verfügbarkeit des CCGW

Nach dem Start des CCGW sendet dieses eine direkte Präsenznachricht an den XMPP Server, der die CTI Funktionalität zur Verfügung stellt. Daraufhin setzt der XMPP Server einen Mechanismus in Gang, der alle bereits angemeldeten CTI fähigen Clients, die diesem CCGW zugeordnet sind, darüber informiert, dass das CCGW nun verfügbar ist (dieses ist sinnvoll, wenn dem XMPP Server mehrere CCGW zur Verfügung stehen).

Bricht nun die Verbindung zwischen CCGW und dem CTI verwaltenden XMPP Server unerwartet zusammen, so erhält der XMPP Server die Präsenznachricht, die ihn darüber informiert, dass das CCGW nun nicht mehr verfügbar ist. Dies erlaubt dem XMPP Server auch alle angemeldeten Clients, die dieses CCGW zugewiesen bekommen haben, darüber zu informieren, dass ihr CCGW aktuell nicht mehr verfügbar und somit die CTI Funktionalität unterbrochen ist.

### b) Verfügbarkeit eines CSTA fähigen Clients

Erhält ein Client von einem XMPP Server eine Statusmeldung, die besagt, dass das zugewiesene CCGW nun erreichbar ist (unabhängig davon, ob die Statusmeldung die Antwort des XMPP Servers auf die Anforderung auf CTI Dienste ist, oder ob die Statusmeldung ein Resultat eines nachträglich verfügbaren CCGW ist), so sendet der Client eine direkte Präsenznachricht an das CCGW. Dies zwingt den XMPP Server dazu das CCGW darüber zu informieren, wenn der Client nicht mehr verfügbar ist, auch ohne, dass sich das CCGW im Roster (Kontaktliste) des Clients befindet.

Wird das CCGW darüber informiert, dass einer seiner Clients nicht mehr verfügbar ist, so wird überprüft, ob dieser Client einen Monitorpunkt gesetzt hat. Ist dies der Fall, so kann automatisch ein "MonitorStop" stellvertretend für den Client an die nachgeschaltete CTI Instanz gesendet werden.

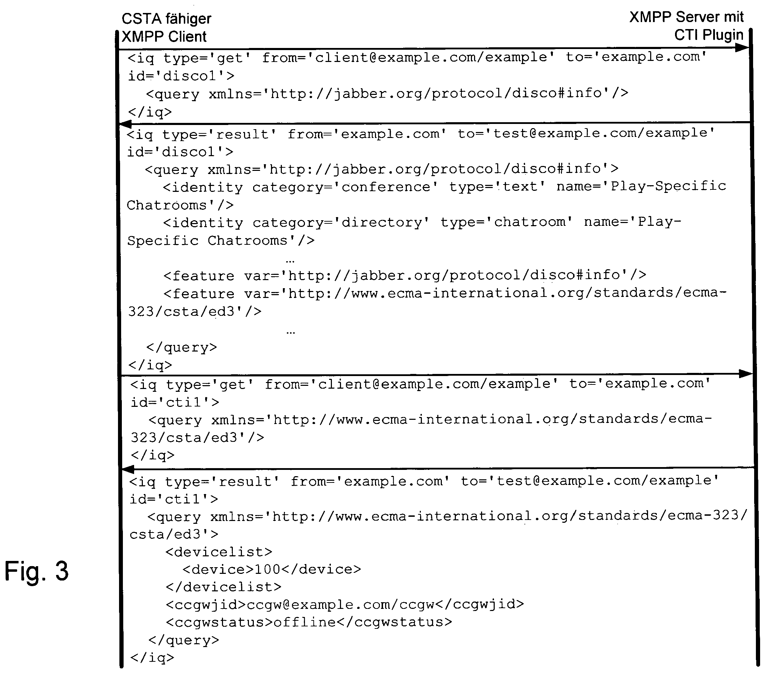

Die Figuren 3, 4 und 5 zeigen Ausführungsbeispiele für den Service Discovery und das anschließende Anfordern von CTI Diensten

In Figur 3 sendet der durch die linke vertikale Linie dargestellte CSTA-fähige XMPP Client im Rahmen der Service Discovery eine Nachricht an den durch die rechte vertikale Linie dargestellten XMPP Server mit CTI Plugin. Der CTIfähige XMPP Server beantwortet diese Anfrage. Darauf erkennt der Client die CTI Eignung des XMPP Servers und fordert einen CTI Dienst an, worauf der XMPP Server antwortet mit zugewiesenem Device, Adresse und Status des CCGW.

Im Folgenden wird die An- und Abmeldung des CCGW während bereits Clients angemeldet sind anhand von Ausführungsbeispielen der Erfindung beschrieben.

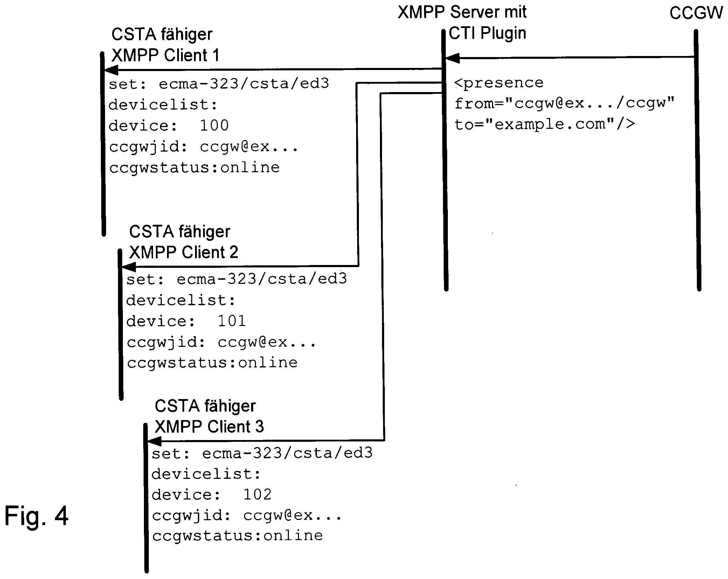

Dem in Figur 4 gezeigten Ausführungsbeispiel liegt die Annahme zugrunde, dass die drei Clients bereits ihre Anmeldung am XMPP Server wie vorstehend beschrieben durchgeführt haben.

Aus Gründen der Übersichtlichkeit werden hier die Nachrichten zwischen XMPP Server und den drei CSTA fähigen Clients verkürzt dargestellt, und es wird die Quittierung (IQ-Stanza vom Typ "result" und darin ein query-Stanza vom Namespace http://www.ecma-international.org/standards/ecma-323/csta/ed3) seitens der Clients nicht dargestellt.

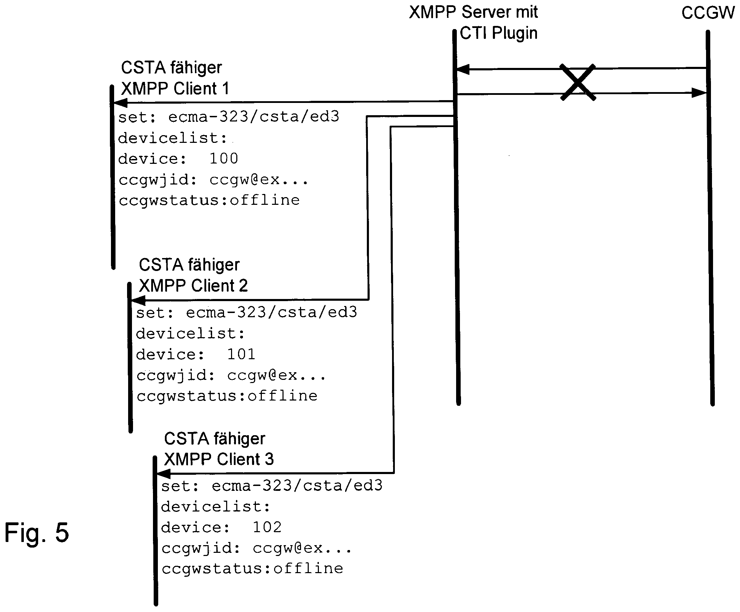

Figur 4 zeigt die Anmeldung des CCGW mit Hilfe einer direkten Präsenznachricht bei einem XMPP Server. Figur 5 zeigt den Nachrichtenfluss bei einem unerwarteten Zusammenbruch der Verbindung zwischen dem CCGW und dem XMPP Server.

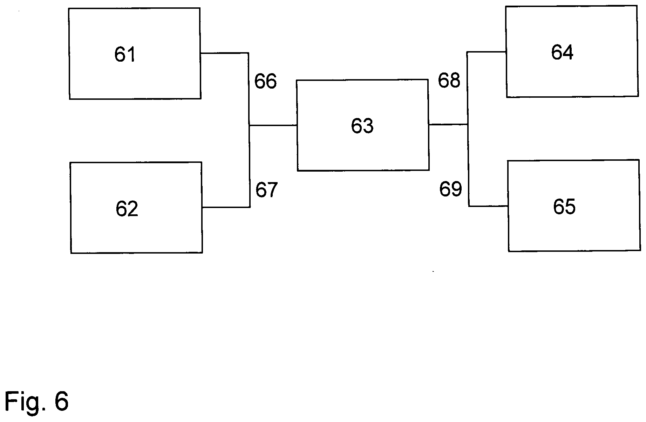

Die Figuren 6, 7 und 8 zeigen möglichen Vernetzungsszenarien im Zusammenhang mit der Erfindung anhand verschiedener Ausführungsbeispiele. Bei dem in der Figur 6 gezeigten Ausführungsbeispiel hat ein Server 63, vorzugsweise ein XMPP Server mit einem Konfigurations-Plugin für CSTA über XMPP, zwei unterschiedliche CCGWs 64, 65 zugewiesen, mit denen er vorzugsweise über die Nachrichtenwege 68, 69 kommuniziert. Der Server 63 kommuniziert vorzugsweise über die Nachrichtenwege 66, 67 mit den Clients 61, 62, die vorzugsweise XMPP Clients mit einem CTI Plugin sind. Im Konfigurations-Plugin wird vorzugsweise eingestellt, an welches CCGW die Nachrichten eines Clients weitergeleitet werden.

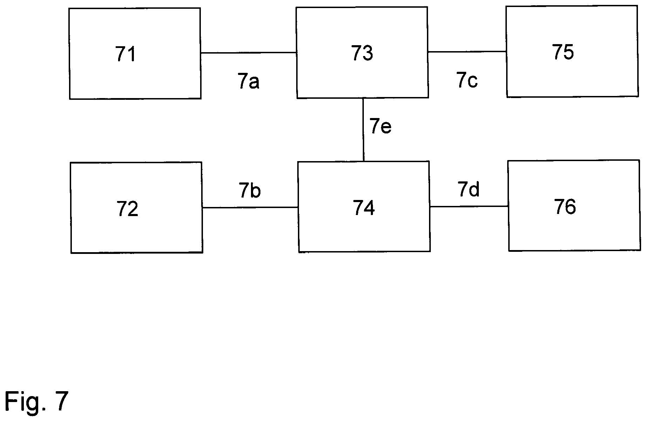

Bei dem in der Figur 7 gezeigten Ausführungsbeispiel hat jeder der beiden Server 73, 74 ein CCGW 75, 76 in der eigenen Domain. Die Server 73 und 74 sind vorzugsweise XMPP Server. Die Nachrichtenwege 7a, 7b, 7c, 7d und 7e deuten die Nachrichtwege an, über die die Einheiten 71, 72, 73, 74, 75 und 76 miteinander kommunizieren. Vorzugsweise ist die Möglichkeit vorgesehen, dass auch das CCGW einer anderen Domain genutzt werden kann. Hierdurch wird es beispielsweise möglich, dass der Client 72 bzw. der Client 71 das CCGW 75 bzw. 76 nutzt, obwohl sich beide in unterschiedlichen Domains befinden. Die Clients 71 und 72 sind vorzugsweise XMPP Clients.

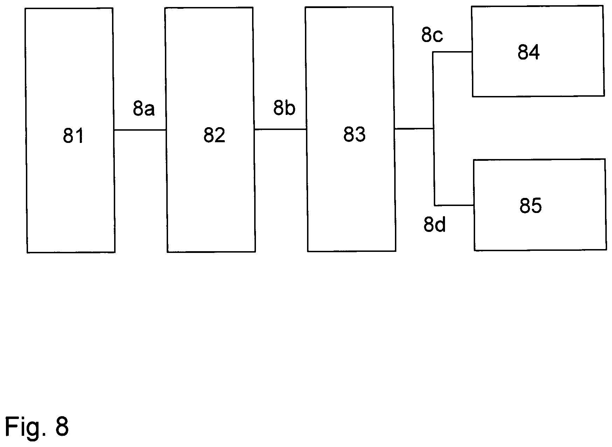

Bei dem in der Figur 8 gezeigten Ausführungsbeispiel besitzt der Server 82 des Clients 81 nicht das vollständige Konfigurations-Plugin, sondern ein reduziertes Konfigurations-Plugin, welches den Client 81 auf einen anderen Server 83 mit dem vollständigen Plugin verweist. Die Nachrichtenwege 8a, 8b, 8c und 8d deuten die Nachrichtwege an, über die die Einheiten 81, 82, 83, 84 und 85 miteinander kommunizieren. Die Server 82 und 83 sind vorzugsweise XMPP Server. Der Client 81 ist vorzugsweise ein XMPP Client.

Die beispielhafte Einbettung im Gesamtsystem am Beispiel der OpenScape Office MX steht stellvertretend für einen allgemeinen Ansatz des Verfahren zur automatischen Übertragung einer Information zur Inbetriebnahme wenigstens eines ersten, für die Sprachkommunikation eingerichteten Kommunikationsendgerätes (EG A, EG B) an wenigstens ein zweites, für die Textkommunikation eingerichtetes Kommunikationsendgerät (CL A, CL B), bei dem die Sprachkommunikation zwischen Kommunikationsendgeräten über wenigstens einen Sprachkommunikationsserver (SCS) und die Textkommunikation zwischen Kommunikationsendgeräten über wenigstens einen Textkommunikationsserver (TCS) vermittelt wird, dadurch gekennzeichnet, dass der wenigstens eine Sprachkommunikationsserver (SCS) und der wenigstens eine Textkommunikationsserver (TCS) Nachrichten über wenigstens eine Umsetzungseinrichtung (GW) austauschen, und dass die Inbetriebnahme von wenigstens dem einen ersten Kommunikationsendgerät (EG A, EG B) über den wenigstens einen Sprachkommunikationsserver (SCS), die wenigstens eine Umsetzungseinrichtung (GW) und den wenigstens einen Textkommunikationsserver (TCS) an das wenigstens zweite Kommunikationsendgerät (CL A, CL B) übertragen wird. 19

Die Komponenten der OpenScape Office MX sind vorzugsweise:
- SCS:: bestehend u.a. aus CSTA Servcice Provider (CSP), Feature Processing (FP) und LAN Device Handler (LDH)
- EG A, EG B:: Kommunikationsendgeräte
- GW:: Call Control Gateway (CCGW)
- TCS:: XMPP Server - Openfire
- CL A, CL B:: XMPP Clients - Spark

Dabei ist es nicht erforderlich, dass die vorher beschriebenen Komponenten physikalisch voneinander getrennt sind oder sich innerhalb einer begrenzten Domain befinden müssen.

Der Kommunikationskanal zwischen dem CCGW und dem XMPP Server ist vorzugsweise realisiert:
- entweder durch eine XMPP Server ⇔ Server Verbindung, d.h. das CCGW agiert als eigenständiger XMPP Server;
- oder durch eine XMPP Client ⇔ Server Verbindung, d.h. das CCGW ist als Client im XMPP Server (z.B. Openfire) administriert
- oder als eine Serverkomponente z.B. gemäß XEP 0114, d.h. das CCGW ist eine Serverkomponente des XMPP Servers.

## Patentansprüche

1. Verfahren zur automatischen Übertragung einer Zustandsinformation oder Zustandsänderungsinformation bei einer Zustandsänderung eines ersten, für die Sprachkommunikation eingerichteten Kommunikationsendgerätes (EG A, EG B) an ein zweites, für die Textkommunikation eingerichtetes Kommunikationsendgerät (CL A, CL B), bei dem die Sprachkommunikation zwischen Kommunikationsendgeräten über wenigstens einen Sprachkommunikationsserver (SCS) und parallel hierzu die Textkommunikation zwischen Kommunikationsendgeräten über wenigstens einen Textkommunikationsserver (TCS) vermittelt wird,
wobei der wenigstens eine Sprachkommunikationsserver (SCS) und der wenigstens eine Textkommunikationsserver (TCS) Nachrichten über wenigstens eine Umsetzungseinrichtung (GW) austauschen, und wobei die Zustandsänderung von dem ersten Kommunikationsendgerät (EG A, EG B) über den wenigstens einen Sprachkommunikationsserver (SCS), die wenigstens eine Umsetzungseinrichtung (GW) und den wenigstens einen Textkommunikationsserver (TCS) dem zweiten Kommunikationsendgerät (CL A, CL B) signalisiert wird,
**dadurch gekennzeichnet, dass** eine Übertragung einer Information zur Signalisierung der Zustandsänderung zwischen dem Textkommunikationsserver (TCS) und dem Sprachkommunikationsserver (SCS) dann erfolgt, wenn der Sprachkommunikationsserver (SCS) dem Textkommunikationsserver zuvor signalisiert hat, dass die Übertragung der Zustandsänderung erfolgen soll.

2. Verfahren nach Anspruch 1, **dadurch gekennzeichnet, dass** die Übertragung der Information zur Signalisierung der Zustandsänderung zwischen dem Textkommunikationsserver (TCS) und dem Sprachkommunikationsserver (SCS) in einem Umfang erfolgt, der durch eine vorherige Signalisierung spezifiziert worden ist.

3. Verfahren nach einem der vorhergehenden Ansprüche, **dadurch gekennzeichnet, dass** das Verfahren die Übertragung wenigstens einer Information zur Signalisierung der Zustandsänderung an ein weiteres zweites, für die Textkommunikation eingerichtetes Kommunikationsendgerät (CL B) umfasst.

4. Anordnung mit einem ersten, für die Sprachkommunikation eingerichteten Kommunikationsendgerät (EG A, EG B)und einem zweiten, für die Textkommunikation eingerichteten Kommunikationsendgerät CL A, CL B), dienend zur automatischen Übertragung einer Zustandsinformation oder Zustandsänderungsinformation bei einer Zustandsänderung des ersten Kommunikationsendgerätes (EG A, EG B)an das zweite Kommunikationsendgerät (CL A, CL B), wobei die Anordnung wenigstens einen Textkommunikationsserver (TCS) zur Vermittlung der Textkommunikation zwischen Kommunikationsendgeräten und wenigstens einen Sprachkommunikationsserver (SCS) zur Vermittlung der Sprachkommunikation zwischen Kommunikationsendgeräten umfasst, und wobei der Telekommunikationsserver (TCS) und der Sprachkommunikationsserver (SCS) parallel zueinander arbeiten und
die Anordnung ferner wenigstens eine Umsetzungseinrichtung (GW) aufweist, über die der eine Sprachkommunikationsserver (SCS) und der Textkommunikationsserver (TCS) miteinander gekoppelt sind und Nachrichten austauschen, und wobei die Information zur Zustandsänderung des ersten Kommunikationsendgerätes (EG A, EG B) über den wenigstens einen Sprachkommunikationsserver (SCS), die wenigstens eine Umsetzungseinrichtung (GW) und den wenigstens einen Textkommunikationsserver (TCS) an das zweite Kommunikationsendgerät (CL A, CL B) übertragen wird,
**dadurch gekennzeichnet, dass** die Anordnung derart eingerichtet ist, dass eine Übertragung einer Information zur Signalisierung einer Zustandsänderung des ersten Kommunikationsendgerätes (EG A, EG B) zwischen dem Sprachkommunikationsserver (SCS) und dem Textkommunikationsserver (TCS) dann erfolgt, wenn der Sprachkommunikationsserver (SCS) dem Textkommunikationsserver (TCS) zuvor signalisiert hat, dass die Übertragung erfolgen soll.

5. Anordnung nach Anspruch 4, **dadurch gekennzeichnet, dass** die Anordnung derart eingerichtet ist, dass die Übertragung einer Information zur Signalisierung der Zustandsänderung zwischen dem Sprachkommunikationsserver (SCS) und dem Textkommunikationsserver (TCS) in einem Umfang erfolgt, der durch eine vorherige Signalisierung spezifiziert ist.

6. Anordnung nach einem der vorherigen Ansprüche, **dadurch gekennzeichnet, dass** die Anordnung ein weiteres zweites, für die Textkommunikation eingerichtetes Kommunikationsendgerät (CL GB) aufweist, und dass wenigstens eine an das weitere zweite, für die Textkommunikation eingerichtete Kommunikationsendgerät (CL GB) übertragene Information zur Signalisierung der Zustandsänderung wenigstens eine Betriebsinformation beinhaltet.

## Claims

1. A method for automatically transmitting status information, or status change information in the case of a status change, of a first communication terminal (EG A, EG B) configured to perform speech communication to a second communication terminal (CL A, CL B) configured to perform text communication, wherein the speech communication between communication terminals is conveyed via at least one speech communication server (SCS) and parallel thereto the text communication is transmitted between communication terminals via at least one text communication server (TCS),
wherein the at least one speech communication server (SCS) and the at least one text communication server (TCS) exchange messages via at least one converter (GW), and wherein the status change is signaled by the first communication terminal (EG A, EG B) via the at least one speech communication server (SCS), the at least one converter (GW) and the at least one text communication server (TCS) to the second communication terminal (CL A, CL B),
**characterized in that** a transmission of information for signaling the status change between the text communication server (TCS) and the speech communication server (SCS) occurs when the speech communication server (SCS) has signaled to the text communication server beforehand that the transmission of the status change should occur.

2. The method according to claim 1, **characterized in that** the transmission of the information for signaling the status change between the text communication server (TCS) and the speech communication server (SCS) occurs to an extent specified by a previous signaling.

3. The method according to any one of the preceding claims, **characterized in that** the method comprises the transmission of at least one information item for signaling the status change to an additional second communication terminal (CL B) configured to perform text communication.

4. An arrangement with a first communication terminal (EG A, EG B) configured for speech communication and a second communication terminal (CL A, CL B) configured for text communication, used for automatically transmitting status information or status change information in the case of a status change of the first communication terminal (EG A, EG B) to the second communication terminal (CL A, CL B), wherein the arrangement comprises at least one text communication server (TCS) for conveying the text communication between communication terminals and at least one speech communication server (SCS) for conveying the speech communication between communication terminals, and wherein the telecommunication server (TCS) and the speech communication server (SCS) work in parallel with each other, and
the arrangement furthermore comprises at least one converter (GW) via which the one speech communication server (SCS) and the text communication server (TCS) are coupled to one another and exchange messages, and wherein the information on the status change of the first communication terminal (EG A, EG B) is transmitted via the at least one speech communication server (SCS), the at least one converter (GW) and the at least one text communication server (TCS) to the second communication terminal (CL A, CL B),
**characterized in that** the arrangement is configured so that a transmission of information for signaling a status change of the first communication terminal (EG A, EG B) between the speech communication server (SCS) and the text communication server (TCS) occurs when the speech communication server (SCS) has signaled beforehand to the text communication server (TCS) that the transmission should occur.

5. The arrangement according to claim 4, **characterized in that** the arrangement is configured so that the transmission of information for signaling the status change between the speech communication server (SCS) and the text communication server (TCS) occurs to an extent specified by a previous signaling.

6. The arrangement according to any one of the preceding claims, **characterized in that** the arrangement comprises an additional second communication terminal (CL GB) configured for text communication, and **in that**, for signaling the status change, at least one information item transmitted to the additional second communication terminal (CL GB) configured for text communication contains at least one operating information item.

## Revendications

1. Procédé de transmission automatique d'une information d'état ou d'une information de changement d'état en cas de changement d'état d'un premier terminal de communication (EG A, EG B) établi pour la communication orale à un second terminal de communication (CL A, CL B) établi pour la communication écrite, dans lequel la communication orale entre les terminaux de communication est transférée par au moins un serveur de communication orale (SCS) et, en parallèle, la communication écrite entre les terminaux de communication est transférée par au moins un serveur de communication écrite (TCS),
dans lequel l'au moins un serveur de communication orale (SCS) et l'au moins un serveur de communication écrite (TCS) échangent des messages par au moins un dispositif de conversion (GW), et dans lequel le changement d'état est signalé par le premier terminal de communication (EG A, EG B) par le biais de l'au moins un serveur de communication orale (SCS), l'au moins un dispositif de conversion (GW) et l'au moins un serveur de communication écrite (TCS) au second terminal de communication (CL A, CL B),
**caractérisé en ce qu'**une transmission d'une information pour la signalisation du changement d'état entre le serveur de communication écrite (TCS) et le serveur de communication orale (SCS) a lieu lorsque le serveur de communication orale (SCS) a précédemment signalé au serveur de communication écrite que la transmission du changement d'état doit avoir lieu.

2. Procédé selon la revendication 1, **caractérisé en ce que** la transmission de l'information pour la signalisation du changement d'état entre le serveur de communication écrite (TCS) et le serveur de communication orale (SCS) a lieu dans une mesure qui a été spécifiée par une signalisation préalable.

3. Procédé selon l'une des revendications précédentes, **caractérisé en ce que** le procédé comprend la transmission d'au moins une information pour la signalisation du changement d'état à un autre second terminal de communication (CL B) établi pour la communication écrite.

4. Dispositif doté d'un premier terminal de communication (EG A, EG B) établi pour la communication orale et d'un second terminal de communication (CL A, CL B) établi pour la communication écrite, servant à la transmission automatique d'une information d'état ou d'une information de changement d'état, en cas de changement d'état du premier terminal de communication (EG A, EG B), au second terminal de communication (CL A, CL B), dans lequel le dispositif comprend au moins un serveur de communication écrite (TCS) pour transférer la communication écrite entre les terminaux de communication et au moins un serveur de communication orale (SCS) pour transférer la communication orale entre les terminaux de communication, et dans lequel le serveur de télécommunication (TCS) et le serveur de communication orale (SCS) fonctionnent en parallèle l'un avec l'autre et
le dispositif présente en outre au moins un dispositif de conversion (GW) par lequel le serveur de communication orale (SCS) et le serveur de communication écrite (TCS) sont couplés l'un à l'autre et échangent des messages, et dans lequel l'information relative au changement d'état du premier terminal de communication (EG A, EG B) est transmise par le biais de l'au moins un serveur de communication orale (SCS), l'au moins un dispositif de conversion (GW) et l'au moins un serveur de communication écrite (TCS) au second terminal de communication (CL A, CL B),
**caractérisé en ce que** le dispositif est configuré de sorte que la transmission d'une information pour la signalisation d'un changement d'état du premier terminal de communication (EG A, EG B) a lieu entre le serveur de communication orale (SCS) et le serveur de communication écrite (TCS) lorsque le serveur de communication orale (SCS) a préalablement signalé au serveur de communication écrite (TCS) que la transmission doit avoir lieu.

5. Dispositif selon la revendication 4, **caractérisé en ce que** le dispositif est configuré de sorte que la transmission d'une information pour la signalisation du changement d'état entre le serveur de communication orale (SCS) et le serveur de communication écrite (TCS) a lieu dans une mesure qui est spécifiée par une signalisation préalable.

6. Dispositif selon l'une des revendications précédentes, **caractérisé en ce que** le dispositif présente un autre second terminal de communication (CL GB) établi pour la communication écrite, et qu'au moins une information transmise à l'autre second terminal de communication (CL GB) établi pour la communication écrite pour la signalisation du changement d'état contient au moins une information de fonctionnement.
